# EUROPÄISCHE PATENTSCHRIFT

(11) **EP 3 104 002 B1**
(45) Veröffentlichungstag und Bekanntmachung des Hinweises auf die Patenterteilung: **21.11.2018**
(21) Anmeldenummer: 16164605.4
(22) Anmeldetag: 12.09.2002
(51) Int. Cl.: F03D 80/80, F03D 13/10, F03D 13/20

(54) **VERFAHREN ZUR ERRICHTUNG EINER WINDENERGIEANLAGE, WINDENERGIEANLAGE**
METHOD FOR ERECTING A WIND TURBINE, WIND TURBINE
PROCEDE D'ETABLISSEMENT D'UNE EOLIENNE ET EOLIENNE

(30) Priorität: 14.09.2001 DE 10145414
(43) Veröffentlichungstag der Anmeldung: 14.12.2016
(62) Teilanmeldung aus: 04016488.1
(73) Patentinhaber: Wobben Properties GmbH, 26607 Aurich (DE)
(72) Erfinder: Wobben, Aloys, 26607 Aurich (DE)
(74) Vertreter: Eisenführ Speiser

(56) Entgegenhaltungen:
- EP-A- 0 675 246
- DK-U3- 9 700 453
- DK-U3- 200 000 086
- ORLHAC M: "LE POSTE SOCLE DANS LA MISE EN SOUTERRAIN DES RESEAUX RURAUX", REVUE GENERALE DE L'ELECTRICITE, RGE. PARIS, FR, Nr. 4, 1. April 1993 (1993-04-01), Seiten 23-25, XP000355859, ISSN: 0035-3116

## Beschreibung

Die Erfindung betrifft ein Verfahren zur Errichtung einer Windenergieanlage sowie die Windenergieanlage in ihrer Ausgestaltung selbst.
Bisher wird bei der Errichtung von Windenergieanlagen zunächst ein Fundament erstellt, dann der Turm der Windenergieanlage errichtet und anschließend das Maschinenhaus an der Turmspitze ausgerüstet und der Rotor mit den Rotorblättern angebracht. Hiernach werden die elektrischen Leistungsmodule wie der Transformator, Schaltschränke, gegebenenfalls Wechselrichter, Mittelspannungsanlage, Niederspannungsverteilung usw. installiert. Dies geschieht fast immer in einem eigenen kleinen Gebäude außerhalb der Windenergieanlage.
In DE 198 16 483.1 ist bereits auch schon vorgeschlagen worden, den Transformator innen im Turm unterzubringen, so dass es der Errichtung eines eigenen Trafogebäudes mit eigenem Fundament nicht mehr bedarf.

Aus DK 2000 00086 U3 ist eine Windenergieanlage mit einem in die Windenergieanlage eingebauten Leistungsmodul bekannt, welches bereits vor Errichtung des Turms der Windenergieanlage gelagert werden kann.

Aufgabe der Erfindung ist es nun, ein Verfahren zu entwickeln, mittels dem die Errichtung von Windenergieanlagen noch günstiger, vor allem aber auch schneller vorgenommen werden kann.
Die Aufgabe wird mit einem Verfahren mit den Merkmalen nach Anspruch 1 und einer Windenergieanlage mit den Merkmalen nach Anspruch 2 gelöst. Vorteilhafte Weiterbildungen sind in den Unteransprüchen beschrieben.

Erfindungsgemäß wird vorgeschlagen, abweichend von der bisherigen Konstruktion von Windenergieanlagen, nach Errichtung des Fundaments der Windenergieanlage die wesentlichen Leistungsmodule, also Trafo, Schaltschränke usw. auf dem Fundament zu platzieren und erst danach den Turm zu errichten, so dass die gesamten Leistungsmodule nach Errichtung des Turms im Bereich des Turmfundamentes bzw. im unteren Teil des Turms geschützt sind und sicher auf dem Turmfundament ruhen.

Die Leistungsmodule sind soweit wie möglich bereits vorgefertigt und auf Trägern montiert, so dass durch einen Kran, den man ohnehin zur Errichtung einer Windenergieanlage benötigt, die Leistungsmodule auf dem Turmfundament aufgestellt werden können und die gesamte Betriebsfertigung, insbesondere das Verlegen von Kabeln sowie die gesamte Betriebsvorbereitung der Windenergieanlage durch Einstellung einzelner Steuerungsmodule, Einrüstung der Schaltschränke etc. in einem geschützten Raum stattfinden kann und mit diesen Tätigkeiten begonnen werden kann, nachdem der Turm errichtet wurde.

Besonders vorteilhaft ist es auch, wenn die Träger der Leistungsmodule Stützfüße aufweisen, die wiederum auf vorpositionierten Platten auf dem Turmfundament ruhen. Diese Platten werden bereits bei der Erstellung des Fundaments vor bestimmten Positionen eingelassen und mit dem Fundament fixiert, so dass auch eine spätere Aufstellung der Leistungsmodule auf sehr einfache Art und Weise vorgenommen werden kann.

Schließlich ist es auch sehr vorteilhaft, wenn für die Kabel, die aus der Windenergieanlage herausführen, also insbesondere die Stromübertragungskabel, Steuerungskabel etc. Leerrohrtraversen im Fundament der Windenergieanlage vorgesehen sind und diese Leerrohrtraversen in vorbestimmten Positionen fixiert liegen. Hierzu werden die Traversen mittels Haltearmen, die ihrerseits wiederum in Teilen des Fundaments oder in der untersitzenden Sektion eines Turmes fixiert sind, gehalten. Durch diese Leerrohrtraversen kann der Bereich der Kabelzuführung exakt vorbestimmt werden und vor allem auch so gelegt werden, dass die Kabel, die aus dem Leistungsmodul in das Fundament reichen, über einen kürzesten und optimalen Kabelweg verfügen.

Die erfindungsgemäßen Maßnahmen erleichtern also auch die gesamte elektrische Einrichtung der Windenergieanlage durch eine Vorfertigung von einzelnen Modulen wie den Leerrohrtraversen, Leistungsmodulträgern etc. bereits bei der Fundamenterrichtung.

Mit den erfindungsgemäßen Maßnahmen lässt sich die gesamte Errichtungszeit der Windenergieanlage deutlich verkürzen. Auch lassen sich mit der Erfindung die Kosten für die gesamte Errichtung der Windenergieanlage verringern, ohne dass irgendwelche technischen Nachteile in Kauf genommen werden müssen.

Die Erfindung wird nachfolgend anhand eines in einer Zeichnung ausgeführten Beispiels näher erläutert.

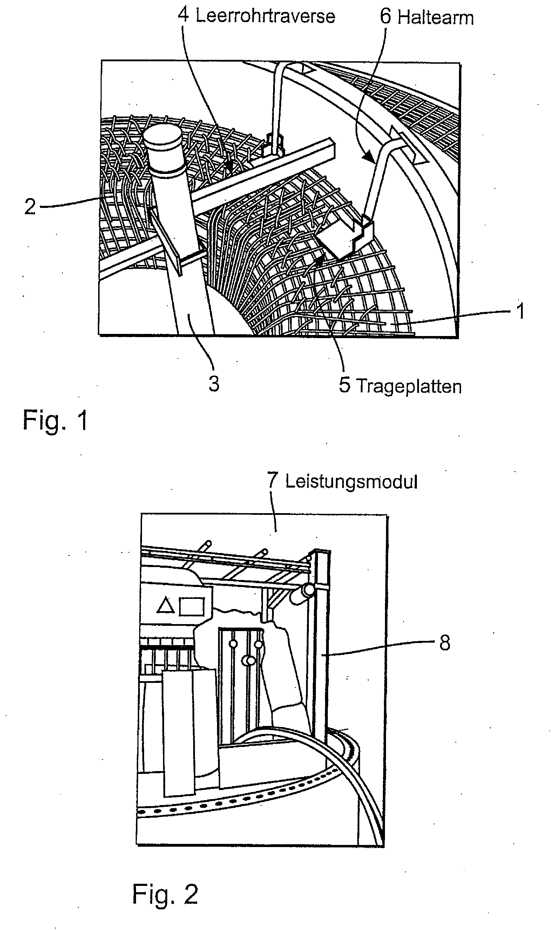

Figur 1 zeigt eine Aufsicht auf ein voreingerichtetes Fundament (ohne Betonfüllung) mit einer Stahlarmierung 1 und 2, an einem Leerrohr 3, welches über eine Verstrebung 4 mit einer an die Armierung angrenzende unterste Turmsektion gehalten wird. Ferner sind Tragplatten 5 zu erkennen, die für Haltearme 6 in der untersten Turmsektion, (die später nach der Errichtung der Windenergieanlage nicht mehr zu sehen ist) angebracht sind.

Das Leerrohr 3 dient später zur Aufnahme von Kabeln, beispielsweise der Stromkabel, über die die gesamte elektrische Energie der Windenergieanlage zum Netz über Erdkabel abgeführt wird. Hierzu ist oftmals nicht nur ein einziges Rohr, sondern mehrere Rohre vorgesehen.

Figur 2 zeigt die Fundamentsektion nach Einfüllung des Betons. Hierbei ist zu sehen, dass die Leerrohre in ihrer vorfixierten Position verbleiben und auch die Tragplatten mit einbetoniert sind, wobei beim Betonieren darauf zu achten ist, dass die Tragplatten satt auf dem Konstruktionsbeton aufliegen und so einen flächigen Lastabtrag gewährleisten. Der Beton reicht bis zur Oberkante der Tragplatten und ist sorgfältig an den Plattenrand angearbeitet.

Nach Aushärtung des Betons können die Haltearme zum Halten der Tragplatten wie auch die Traversen zur Fixierung der Leerrohre abmontiert und für die Errichtung weiterer Anlagen wiederverwendet werden.

Nach dem Aushärten des Betons wird zur weiteren Errichtung der Windenergieanlage nicht - wie bis dahin üblich - der Turm auf das unterste Fundament für die Turmsektion aufgesetzt, sondern es wird zunächst ein Leistungsmodul 7 auf die Tragplatten 5 gestellt (Figuren 2, 3 und 4).

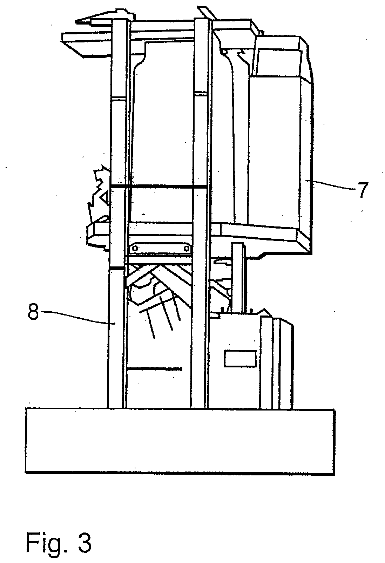

Ein solches Leistungsmodul 7 ist in Figur 3 in einer zweiteiligen Ausführung gezeigt, wobei das Leistungsmodul auch aus weiteren Teilen bestehen kann.

Die beiden Teile des Leistungsmoduls 7 sind im dargestellten Beispiel übereinander gestellt und das gesamte Leistungsmodul besteht aus zwei übereinandergestellten Trägern 8, die ihrerseits wiederum wesentliche Teile der Leistungsmodule aufnehmen, also beispielsweise den Transformator, Wechselrichter, Schaltschränke, Mittelspannungsanlage etc..

Die übereinandergestellten Träger 8 sind nach Art eines Rahmens aufgebaut und passen exakt übereinander, so dass auch eine zuverlässige Befestigung gegeneinander gewährleistet ist.

Die einzelnen Träger weisen unter anderem vier - ein Rechteck aufspannende - vertikal ausgerichtete Holme auf, die untereinander verbunden sind. Diese Holme sind an ihrer Unter- und Oberseite miteinander verschraubt.

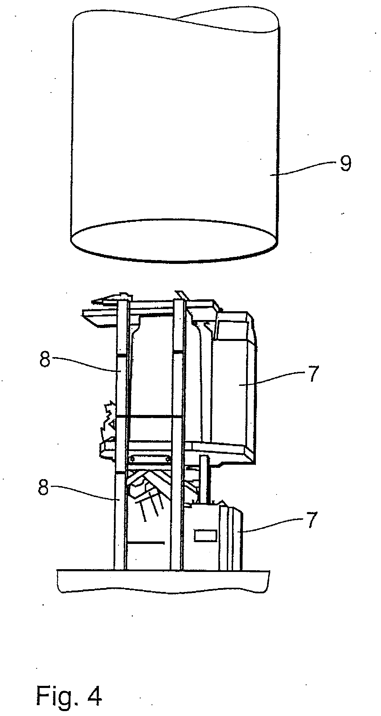

Nach der Aufstellung des elektrischen Leistungsmoduls auf dem Fundament wird der Turm 9 errichtet (Figur 4) und hierbei über das Leistungsmodul gestülpt. Dazu sind die äußeren Abmaße des Leistungsmoduls hinsichtlich Breite und Länge geringer als der Innendurchmesser des Turms im unteren Turmbereich/Fundamentbereich.

Nach Errichtung des Turms wird die Windenergieanlage wie üblich mit dem Maschinenhaus ausgestattet, der Rotor wird montiert und für die Inbetriebnahme werden entsprechende elektrische Verbindungen zwischen dem Generator und dem Leistungsmodul 7 hergestellt und es erfolgt auch der Anschluss des Leistungsmoduls (Ausgang des Transformators) an das Stromversorgungsnetz.

Wenn die vorbeschriebenen Leerrohre bzw. für die Kabeldurchführung vorgesehenen Einrichtungen in bestimmter vorbeschriebener Position vorfixiert sind, kann auch die Verbindung zwischen dem Leistungsmodul und dem Netz äußerst schnell und günstig hergestellt werden, wobei die Kabellängen insgesamt minimal sind, weil die Leerrohre dort positioniert sind, wo sie genau zur Anlage mit den entsprechenden Teilen des Leistungsmoduls kommen.

Bei der erfindungsgemäßen Windenergieanlage ist es auch vorteilhaft, wenn der Zugang der Windenergieanlage nicht mehr unbedingt im festen Fundamentbereich durch eine übliche Tür erfolgt, sondern durch eine Tür (Zugang), die so positioniert ist, dass sie in den Bereich oberhalb der Hoch- oder Mittelspannung führenden Teile des Leistungsmoduls mündet. Hierzu kann an der Außenseite des Turms eine entsprechende Leiter oder Treppe vorgesehen sein. Diese Positionierung der Zugangstür hat den Vorteil, dass das Personal, welches die Anlage häufiger betreten muss, sich nicht stets an den Hoch- oder Mittelspannung führenden Teilen des Leistungsmoduls vorbei bewegen muss, während die Anlage in Betrieb ist. Damit wird auch sichergestellt, dass nicht unvorhergesehenerweise oder aus Versehen während des Betriebs der Windenergieanlage jemand sich in unmittelbarer Nähe des Leistungsmoduls befindet und hierbei in Berührung mit spannungs- oder stromgeführten Teilen kommt, was einen großen Unfall verursachen könnte.

Im Bereich der Zugangstür des Turms ist dann eine entsprechende Zwischenplattform vorgesehen, die das Personal, welches den Turm betritt, begehen kann, um dann im Inneren des Turms weiter in die Windenergieanlage hoch zu steigen oder an verschiedenen Steuereinrichtungen Einstellungen vorzunehmen oder auch Messdaten abzulesen.

Bei einer Windenergieanlage des erfindungsgemäßen Typs handelt es sich um eine solche, die regelmäßig über mehr als 100 kW Nennleistung verfügt, vorzugsweise eine Nennleistung im Bereich von 500 kW, 1 MW, 1,5 MW oder deutlich mehr aufweist. Bevorzugt ist die Zwischenplattform mit einer verschließbaren Platte versehen, durch die das Personal in den unteren Bereich des Leistungsmoduls einsteigen kann. Mit dem Verschluss der Klappe ist eine weitere Sicherung des unteren Teils des Leistungsmoduls gegen unbefugten Zugriff gewährleistet.

Der innere Durchmesser des Turms im Fundamentbereich kann dabei mehrere Meter betragen, so dass auch die gesamte Fläche dort z.B. 100 m² oder mehr beträgt und daher auch eine ausreichend große Fläche zur Aufnahme der Leistungsmodule zur Verfügung steht. Soweit in dieser Anmeldung der Begriff "Leistungsmodul" verwendet wird, so ist damit der Mittel- bzw. Hochspannungsführende Teil der Windenergieanlage gemeint. Dies sind insbesondere die Aggregate wie Transformator oder Wechselrichter oder Notschalter sowie der Mittelspannungsschaltschrank oder auch die Niederspannungsverteiler.

## Patentansprüche

1. Verfahren zur Errichtung einer Windenergieanlage mit einem Turm (9), der auf einem Fundament gründet sowie einem elektrischen Leistungsmodul (7), im wesentlichen bestehend aus einem Transformator und gegebenenfalls einem Wechselrichter oder anderen elektrischen Einrichtungen, wie z.B. Schaltschranken, die zur Steuerung der Windenergieanlage und/oder zur Durchleitung der elektrischen Leistung, die vom Generator der Windenergieanlage zur Verfügung gestellt und in ein Netz eingespeist wird, vorgesehen ist, wobei das Leistungsmodul (7) vor Errichtung des Turms auf dem Turmfundament gelagert wird, und die Breite und/oder Länge des Leistungsmoduls geringer sind als der Durchmesser des Turms der Windenergieanlage im Fundamentbereich, wobei die Leistungsmodule soweit wie möglich vorgefertigt sind und auf Träger montiert sind, so dass durch einen Kran, den man ohnehin zur Errichtung einer Windenergieanlage benötigt, die Leistungsmodule auf dem Turmfundament aufgestellt werden können, insbesondere das Verlegen von Kabeln sowie die gesamte Betriebsvorbereitung der Windenergieanlage durch Einstellung einzelner Steuerungsmodule, Einrichtung der Schaltschranke etc. in einem geschützten Raum stattfinden kann und mit diesen Tätigkeiten begonnen werden kann, nachdem der Turm errichtet wurde und wobei das Leistungsmodul einen Träger aufweist, **dadurch gekennzeichnet, dass** der Träger des Leistungsmoduls Stützfüße aufweist, die auf Platten ruhen, die bereits bei Erstellung des Fundaments in bestimmten Positionen eingelassen und mit dem Fundament fixiert werden und wobei die Platten bei Erstellung des Fundaments von Haltearmen gehalten werden und die Haltearme nach Aushärtung des Betons des Fundaments abmontiert werden und das Leistungsmodul in einer zweiteiligen Ausführung ausgeführt wird, wobei das Leistungsmodul aus weiteren Teilen bestehen kann, die beiden Teile des Leistungsmoduls übereinander gestellt sind, wobei die Windenergieanlage über eine Nennleistung verfügt, die im Bereich von 1,5 MW oder deutlich mehr liegt, und das Leistungsmodul außer dem Transformator insbesondere Aggregate wie Wechselrichter oder Stromnotschalter sowie Mittelspannungsschranken oder auch die Niederspannungsverteiler aufweist.

2. Windenergieanlage bestehend aus einem Turm (9), welcher auf einem Fundament gründet und einem Leistungmodul (7), wobei das Leistungsmodul (7) wenigstens einen Transformator aufweist, mittels dem die elektrische Energie, die vom Generator der Windenergieanlage zur Verfügung gestellt wird, auf eine mittlere und/oder Hochspannung transformiert wird, wobei das Leistungsmodul (7) darüber hinaus weitere Einheiten enthält, mittels denen die elektrische Energie, die vom Generator der Windenergieanlage bereitgestellt wird, gesteuert und/oder geleitet wird, und/oder aufgewertet wird, wobei das Leistungsmodul (7) einen Träger aufweist, der auf dem Fundament der Windenergieanlage aufgesetzt ist und der Träger die elektrischen Einrichtungen des Leistungsmoduls, wie z.B. den Transformator, aufnimmt, und die Breite und/oder Länge des Leistungsmoduls geringer sind als der Durchmesser des Turms der Windenergieanlage im Fundamentbereich, wobei die Leistungsmodule soweit wie möglich vorgefertigt sind und auf Träger montiert sind, so dass durch einen Kran, den man ohnehin zur Errichtung einer Windenergieanlage benötigt, die Leistungsmodule auf dem Turmfundament aufgestellt werden können, insbesondere das Verlegen von Kabeln sowie die gesamte Betriebsvorbereitung der Windenergieanlage durch Einstellung einzelner Steuerungsmodule, Einrichtung der Schaltschränke etc. in einem geschützten Raum stattfinden kann und mit diesen Tätigkeiten begonnen werden kann, nachdem der Turm errichtet wurde und wobei das Leistungsmodul einen Träger aufweist, **dadurch gekennzeichnet, dass** der Träger des Leistungsmoduls Stützfüße aufweist, die auf Platten ruhen, die bereits bei Erstellung des Fundaments in bestimmten Positionen eingelassen und mit dem Fundament fixiert werden und wobei die Platten bei Erstellung des Fundaments von Haltearmen gehalten werden und die Haltearme nach Aushartung des Betons des Fundaments abmontiert werden und das Leistungsmodul in einer zweiteiligen Ausführung ausgeführt wird, wobei das Leistungsmodul aus weiteren Teilen bestehen kann, die beiden Teile des Leistungsmoduls übereinander gestellt sind, wobei die Windenergieanlage über eine Nennleistung verfügt, die im Bereich von 1,5 MW oder deutlich mehr liegt, und das Leistungsmodul außer dem Transformator insbesondere Aggregate wie Wechselrichter oder Stromnotschalter sowie Mittelspannungsschranken oder auch die Niederspannungsverteiler aufweist.

3. Windenergieanlage nach Anspruch 2, **dadurch gekennzeichnet, dass** das Leistungsmodul zweiteilig ausgebildet ist, wobei die beiden Teile aufeinander gestellt sind und die Träger im Übergangsbereich zwischen dem ersten und zweiten Teil so ausgebildet sind, dass sie aufeinander passen und gegen einander befestigt sind.

4. Windenergieanlage nach einem der Ansprüche 2 oder 3, **dadurch gekennzeichnet, dass** das Leistungsmodul aus einem Transformator und einem Wechselrichter und wenigstens einem Schaltschrank zur Aufnahme von elektrischen Steuerungseinrichtungen der Windenergieanlagen besteht.

5. Windenergieanlage nach einem der vorhergehenden Ansprüche, **dadurch gekennzeichnet, dass** im Fundament der Windenergieanlage Leerrohre (3) zur Aufnahme von Kabeln angeordnet sind und die Leerrohre vor der Feststellung des Fundaments mit den Traversen fixiert sind.

## Claims

1. A method for constructing a wind energy plant having a tower (9) which is based on a foundation, and also an electrical power module (7) essentially consisting of a transformer and optionally an inverter or other electrical devices, such as switchgear cabinets, which is intended for controlling the wind energy plant and/or for passing on the electrical power which is made available by the generator of the wind energy plant and is fed into a grid system, wherein the power module (7) is mounted on the tower foundation prior to construction of the tower, and the width and/or length of the power module are/is less than the diameter of the tower of the wind energy plant in the foundation area, wherein the power modules as far as possible are prefabricated and are mounted on supports, so that the power modules can be placed on the tower foundation by a crane, which is required for constructing a wind energy plant anyway, in particular the laying of cables and the entire commissioning of the wind energy plant by setting individual control modules, installing the switchgear cabinets etc. can take place in a protected space and these activities can be commenced once the tower has been constructed, and wherein the power module has a support, **characterised in that** the support of the power module has supporting feet which rest on plates which are set in in certain positions already during finishing of the foundation and are fixed with the foundation, and the plates being held by holding arms during finishing of the foundation and the holding arms being dismantled once the concrete of the foundation has set and the power module being in a two-part embodiment, it being possible for the power module to consist of further parts, the two parts of the power module being placed one above the other, the wind energy plant having a rated output which is in the region of 1.5 MW or significantly more, and the power module apart from the transformer having in particular units such as inverters or emergency current switches and medium-voltage cabinets or alternatively the low-voltage distributors.

2. A wind energy plant consisting of a tower (9) which is based on a foundation, and a power module (7), with the power module (7) having at least one transformer by means of which the electrical power which is made available by the generator in the wind energy plant is transformed to a medium and/or high voltage, wherein the power module (7) furthermore contains further units by means of which the electrical power which is provided by the generator of the wind energy plant is controlled and/or conducted, and/or upgraded, wherein the power module (7) has a support which is placed on the foundation of the wind energy plant, and the support accommodates the electrical devices of the power module, such as the transformer, and the width and/or length of the power module are/is less than the diameter of the tower of the wind energy plant in the foundation area, wherein the power modules as far as possible are prefabricated and are mounted on supports, so that the power modules can be placed on the tower foundation by a crane, which is required for constructing a wind energy plant anyway, in particular the laying of cables and the entire commissioning of the wind energy plant by setting individual control modules, installing the switchgear cabinets etc. can take place in a protected space and these activities can be commenced once the tower has been constructed, and wherein the power module has a support, **characterised in that** the support of the power module has supporting feet which rest on plates which are set in in certain positions already during finishing of the foundation and are fixed with the foundation, and the plates being held by holding arms during finishing of the foundation and the holding arms being dismantled once the concrete of the foundation has set and the power module being in a two-part embodiment, it being possible for the power module to consist of further parts, the two parts of the power module being placed one above the other, the wind energy plant having a rated output which is in the region of 1.5 MW or significantly more, and the power module apart from the transformer having in particular units such as inverters or emergency current switches and medium-voltage cabinets or alternatively the low-voltage distributors.

3. A wind energy plant according to Claim 2, **characterised in that** the power module is formed in two parts, with the two parts being placed one on top of the other, and the supports being designed in the transitional area between the first part and the second part such that they match one another and are attached to one another.

4. A wind energy plant according to one of Claims 2 or 3, **characterised in that** the power module consists of a transformer and an inverter and at least one switchgear cabinet for accommodating electrical control devices of the wind energy plants.

5. A wind energy plant according to one of the preceding claims, **characterised in that** empty conduits (3) for accommodating cables are arranged in the foundation of the wind energy plant, and the empty conduits are fixed to the cross-members prior to the finishing of the foundation.

## Revendications

1. Procédé servant à ériger une éolienne pourvue d'une tour (9), qui repose sur un socle,
et également pourvue d'un module de puissance (7) électrique constitué sensiblement d'un transformateur et éventuellement d'un onduleur ou d'autres équipements électriques, tels que des armoires de distribution, qui sont prévues afin de commander l'éolienne et/ou afin d'acheminer la puissance électrique, qui est fournie par le générateur de l'éolienne et qui est injectée dans un réseau, dans lequel
le module de puissance (7) est monté avant d'ériger la tour sur le socle de la tour, et la largeur et/ou la longueur du module de puissance sont inférieures au diamètre de la tour de l'éolienne dans la zone de socle, dans lequel les modules de puissance sont dans la mesure du possible préfabriqués et sont montés sur des supports si bien qu'une grue, requise dans tous les cas afin d'ériger une éolienne, permet de placer les modules de puissance sur le socle de tour, en particulier la pose de câbles ainsi que les préparatifs généraux d'exploitation de l'éolienne peuvent avoir lieu en réglant divers modules de commande, en installant les armoires de distribution, etc. dans un espace protégé et qu'il est possible de commencer par ces activités après avoir érigé la tour, et dans lequel le module de puissance présente un support, **caractérisé en ce que** le support du module de puissance présente des pieds d'appui, qui reposent sur des plaques, qui sont intégrées dès la création du socle dans certaines positions et sont fixées au socle et dans lequel les plaques sont maintenues par des bras de maintien lors de la création du socle et les bras de maintien sont démontés après le durcissement du béton du socle et le module de puissance est réalisé selon une réalisation en deux parties, dans lequel le module de puissance peut être constitué de parties supplémentaires, les deux parties du module de puissance sont placées l'une au-dessus l'autre, dans lequel l'éolienne dispose d'une puissance nominale qui est de l'ordre de 1,5 MW ou nettement plus, et le module de puissance présente outre le transformateur en particulier des groupes tels que l'onduleur ou le commutateur de secours de courant ainsi que des armoires de tension moyenne ou encore des distributeurs à basse tension.

2. Eolienne constituée d'une tour (9), qui repose sur un socle, et d'un module de puissance (7), dans laquelle le module de puissance (7) présente au moins un transformateur, au moyen duquel l'énergie électrique, qui est fournie par le générateur de l'éolienne, est transformée pour s'établir à une tension moyenne et/ou à une tension élevée, dans laquelle le module de puissance (7) contient par ailleurs des unités supplémentaires, au moyen desquelles l'énergie électrique, qui est fournie par le générateur de l'éolienne, est commandée et/ou acheminée et/ou évaluée, dans laquelle le module de puissance (7) présente un support, qui est placé sur le socle de l'éolienne, et le support loge les équipements électriques du module de puissance, par exemple le transformateur, et la largeur et/ou la longueur du module de puissance sont inférieures au diamètre de la tour de l'éolienne dans la zone de socle, dans laquelle les modules de puissance sont dans la mesure du possible préfabriqués et sont montés sur le support, si bien qu'une grue, requise dans tous les cas afin d'ériger l'éolienne, permet de placer les modules de puissance sur le socle de tour, en particulier la pose de câbles ainsi que l'ensemble des préparatifs d'exploitation de l'éolienne peuvent avoir lieu en réglant divers modules de commande, en installant des armoires de distribution, etc. dans un espace protégé et il est possible de commencer par ces activités après avoir érigé la tour, et dans laquelle le module de puissance présente un support, **caractérisée en ce que** le support du module de puissance présente des pieds d'appui, qui reposent sur des plaques, qui sont intégrés dès que le socle est érigé dans certaines positions et sont fixées au socle et dans laquelle les plaques sont maintenues par des bras de maintien lors de la création du socle et les bras de maintien sont démontés après le durcissement du béton du socle et le module de puissance est réalisé selon une réalisation en deux parties, dans laquelle le module de puissance peut être constitué de parties supplémentaires, les deux parties du module de puissance sont placées l'une au-dessus de l'autre, dans laquelle l'éolienne dispose d'une puissance nominale qui est de l'ordre de 1,5 MW ou nettement plus, et le module de puissance présente outre le transformateur en particulier des groupes tels que l'onduleur le commutateur de secours de courant ainsi que des armoires de tension moyenne ou encore des distributeurs à basse tension.

3. Eolienne selon la revendication 2, **caractérisée en ce que** le module de puissance est réalisé en deux parties, dans laquelle les deux parties sont placées l'une sur l'autre et les supports sont réalisés dans la zone de transition entre la première et la seconde partie de telle sorte qu'ils sont adaptés les uns aux autres et sont fixés les uns contre les autres.

4. Eolienne selon l'une quelconque des revendications 2 ou 3, **caractérisée en ce que** le module de puissance est constitué d'un transformateur et d'un onduleur et d'au moins une armoire de distribution servant à loger des équipements de commande électriques des éoliennes.

5. Eolienne selon l'une quelconque des revendications précédentes, **caractérisée en ce que** des tubes vides (3) servant à loger des câbles sont disposés dans le socle de l'éolienne et les tubes vides sont fixés à des traverses avant d'immobiliser le socle.
